Europäisches Patentamt

(19) European Patent Office

Office européen des brevets

(11) Publication number: **0 275 330**
**B1**

# EUROPEAN PATENT SPECIFICATION

(45) Date of publication of the patent specification:
**12.12.90**

(21) Application number: **86307902.6**

(22) Date of filing: **13.10.86**

(51) Int. Cl.⁵: **F16L 37/28**

(54) **Outlet valves for fluid transport containers.**

(43) Date of publication of application:
**27.07.88 Bulletin 88/30**

(45) Publication of the grant of the patent:
**12.12.90 Bulletin 90/50**

(84) Designated Contracting States:
**BE DE ES FR GB NL SE**

(56) References cited:
**DE-B- 1 294 759**
**GB-A- 2 126 302**

(73) Proprietor: **EMCO WHEATON U.K. LIMITED, Westwood Estate, Margate, Kent CT9 4JR(GB)**

(72) Inventor: **James, Simon, Whitelands Millers Lane, Monkton Kent CT12 4JW(GB)**

(74) Representative: **Davies, Christopher Robert et al, Frank B. Dehn & Co. Imperial House 15-19 Kingsway, London WC2B 6UZ(GB)**

## Description

This invention relates to outlet valves for fluid transport containers, such as containers carried by or forming part of road and rail tankers.

Fluid transport containers are typically provided with one or more outlet valves adapted to be releasably coupled to a delivery conduit such as a flexible hose or loading arm leading to suitable storage means when it is desired to discharge some or all of the fluid from the container.

Such valves are openable either manually or by remote control by an operator via a suitable actuating means to permit release of fluid therethrough, and are closed when a desired amount of fluid has been delivered and when the container is in transit.

An example of such a valve is the so-called A.P.I. valve commonly found on road tankers which includes a standard male coupling means adapted to be lockingly interengaged with complementary female coupling means connected to delivery hoses for supply e.g. of petrol or diesel to garage storage tanks.

With such containers it is clearly important to avoid the escape of fluid to the outside which in the case of toxic or inflammable fluids may of course be a serious safety hazard and in this respect experience shows that inadvertent release of fluid via the outlet valve of the container can be a problem.

DE-B 1 294 759 discloses an outlet valve for a fluid transport container, such valve being connectable to a fluid delivery conduit via a releasable coupling means and being openable to allow discharge of fluid from said container into the delivery conduit, and means associated with the coupling means provided to prevent the valve from opening when it is not connected to a delivery conduit via such coupling means. In DE-B 1 294 759 this is achieved by means of a mechanical interlock for a nozzle valve operated by means for a lever whereby the valve cannot be opened unless properly coupled to a delivery conduit.

In modern fluid transport containers, however, the valve is normally opened by remote control and such a mechanical interlock is not appropriate.

Accordingly the present invention is characterised in that said valve is selectively openable in response to an opening signal generated remotely from said valve and said opening prevention means comprises means for isolating said valve from a said opening signal unless said valve is connected to a delivery conduit.

In accordance with the invention the problem of inadvertent release of fluid via the outlet valve is avoided since such valve can only be opened when duly connected to a delivery conduit via the coupling means. The increase in safety thus provided is of particular significance e.g. in the case of a tank divided into a number of different containers or compartments, each of which has an outlet valve operated by remote control. In such a case it will be appreciated that there is potentially a greater risk that an operator may inadvertently try to open one of the outlet valves which is not connected to a delivery conduit.

The means for preventing the valve from opening may take any convenient form. Thus, a suitable sensing means associated with the coupling means may be e.g. electrically, hydraulically or mechanically coupled to a closure member of the valve to maintain such member in its closed condition at all times when the valve is not connected to a delivery conduit. Such closure member may also serve as the main closure member of the valve which is normally operable to open and close the valve as desired when connected to a delivery conduit, or alternatively may comprise an additional closure member arranged either upstream of or downstream from a main valve closure member.

In a preferred embodiment of outlet valve having only a single closure member, the valve is pneumatically operable and includes a closure member which is movable into its open condition in response to pneumatic pressure applied from a supply line e.g. to a gas pressure source via a remote control unit. In such an embodiment, the means for preventing the valve from opening conveniently comprises a pneumatic switch arranged in the supply line and adapted to isolate the valve from the pressure source when the valve is not connected to a delivery conduit, regardless of the condition of the remote control unit. In a preferred such arrangement, the switch comprises a housing defining a bore having radially directed inlet and outlet ducts for connection in the pneumatic supply line, and a plunger arranged for axial movement in the bore between an open condition wherein the inlet and outlet ducts communicate with one another and a closed condition wherein gas blow between the ducts is prevented, said housing being mounted to or adjacent the coupling means and co-operating therewith so that the plunger is only moved to its open condition when the valve is connected to a conduit. Conveniently the plunger may be spring biased into its closed condition.

In a preferred embodiment, the coupling means comprises complementary male and female parts adapted to be lockingly interengaged, one such part being connected to the outlet valve of a container and the other part being connected to a delivery conduit such as a hose. In such an arrangement, the housing of the pneumatic switch may conveniently be mounted to or adjacent the part of the coupling means connected to or forming part of the valve, and an operating member for the plunger being arranged to co-operate with the other said part in such a way that when the parts are interconnected the plunger is moved to its open condition, against the spring biasing. Such an arrangement combines reliable operation with structural simplicity and, moreover, the pneumatic switch can be incorporated in existing valves without the need for substantial modification thereof.

The invention extends to a fluid transport container, such as a container carried by or forming part of a road or rail tanker, incorporating one or more outlet valves as discussed above.

A preferred embodiment of the invention will now be described, by way of example only, with reference to the accompanying drawings, wherein:

Fig. 1 is a schematic side elevation (partly in section) illustrating a valve in accordance with the invention coupled to a delivery hose;

Fig. 2 is a schematic view illustrating the pneumatic switching valve in its closed condition.

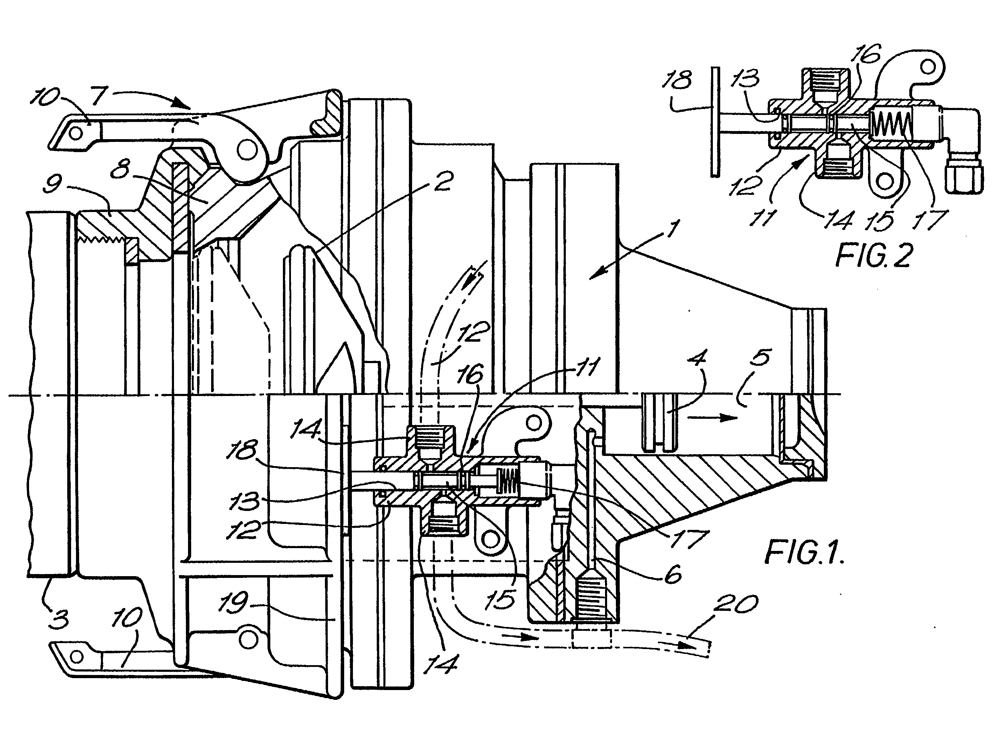

Referring to the drawings, an outlet valve 1 for a transport container in the form of an A.P.I. valve of a sort generally well known in the art includes a closure member 2 movable between an open condition wherein fluid may be released from the container into a delivery hose 3 and a closed condition (shown in broken lines in Fig. 1) wherein a discharge of fluid is prevented. The closure member is pneumatically operable by means of a piston 4 coupled to the closure member and displaceable in a chamber 5 in response to pneumatic pressure introduced into one side of the chamber via a duct 6. Thus, application of pneumatic pressure through duct 6 into lefthand side of the chamber 5 causes movement of the closure member 2 into its open condition. A biasing spring (not shown) is provided to return the closure member 2 to its closed condition when no pneumatic pressure is applied via the duct 6.

As shown in Fig. 1, coupling means 7 are provided for releasably connecting the valve 1 to the delivery hose 3, the coupling means 7 including a male part 8, which in the illustrated embodiment forms part of the valve housing, and a complementary female part 9 connected to the hose 3. Locking members 10 are adapted releasably to interconnect the male and female parts, as is known in the art.

In the illustrated valve, means are provided to prevent the valve from opening when not connected to a conduit via the coupling means 7. Such means comprises a pneumatic switch 11 arranged in the supply line 12 connecting the duct 6 with a pressure gas source via a remote control unit (not shown). The switch 11 comprises a housing 12 mounted to the valve housing and defining an axial bore 13 having radially arranged inlet and outlet ducts 14. Disposed in the bore 13 is a plunger 15 carrying an O-ring seal 16. A biasing spring 17 is arranged to urge the plunger 15 leftwardly as shown in the drawings, whilst an operating member 18 carried by the plunger is arranged to co-operate with a forward peripheral edge 19 of the female part 9 of the coupling means 7 when the parts of the coupling means are interconnected. Thus, as shown in Fig. 1 when the parts 8, 9 are interconnected, the operating member 18 is urged rightwardly against the biasing force of the spring 17 so that the plunger is moved into an open condition wherein the inlet and outlet ducts 14 communicate with one another.

In this condition, pneumatic gas pressure can be applied to the housing 5 via the duct 6 and the valve can be opened as desired consequent upon the line 12 being connected to the pneumatic source via the appropriate pneumatic switch of the remote control unit (not shown). However, when the female part 9 and thus the delivery hose 3 are detached from the valve 1, the biasing spring 17 urges the plunger leftwardly into the condition shown in Fig. 2, wherein the O-ring seal 16 is located axially between the inlet and outlet ducts 14 so that the duct 6 and housing 5 are isolated from the line 12. In this condition, it will be appreciated that the valve cannot be opened by inadvertent application of pneumatic pressure to the line 12 e.g. consequent upon the operator selecting the wrong pneumatic switch in the remote control unit.

As shown in Fig. 1, the pneumatic switch 11 is connected to the duct 6 via a T-junction 20, the other arm of the Tin a preferred embodiment being connected to an indicating means at the remote control unit adapted to provide a visual indication consequent upon application of pneumatic pressure. This provides the operator with confirmation that the valve has been duly opened, and the absence of a visual indication will alert the operator to the fact that no gas pressure has been applied to the duct 6 and therefore to the possibility of the wrong switch having been selected on the remote control unit.

**Claims**

1. An outlet valve (1) for a fluid transport container, such valve (1) being connectable to a fluid delivery conduit (3) via a releasable coupling means (7) and being openable to allow discharge of fluid from said container into the delivery conduit (3), and means (11) associated with the coupling means (7) provided to prevent the valve (1) from opening when it is not connected to a delivery conduit (3) via such coupling means (7), characterised in that said valve is selectively openable in response to an opening signal generated remotely from said valve (1) and said opening prevention means (11) comprises means for isolating said valve (1) from a said opening signal unless said valve (1) is connected to a delivery conduit (3).

2. An outlet valve as claimed in claim 1 comprising a closure member (2) which is movable into an open condition in response to pneumatic pressure applied to the valve (1) via a supply line (12), said means (11) for preventing the valve from opening comprising a pneumatic switch (11) connected to the supply line (12) and adapted to isolate the valve (1) from the pneumatic pressure source when the valve (1) is not connected to a delivery conduit (3).

3. An outlet valve as claimed in claim 2 wherein the switch (11) comprises a housing defining a bore (13) having radially directed inlet and outlet ducts (14) for connection in the pneumatic supply line (12), and a plunger (15) arranged for axial movement in the bore (13) between an open condition wherein the inlet and outlet ducts (14) communicate with one another and a closed condition wherein gas flow between the ducts is prevented, said housing being mounted to or adjacent the coupling means (7) and co-operating therewith so that the plunger (15) is only moved to its open condition when the valve is connected to a conduit (3).

4. An outlet valve as claimed in claim 3 wherein the plunger (15) is spring biased into its closed condition.

5. An outlet valve as claimed in claims 3 and 4 wherein the coupling means (7) comprises complementary male and female parts (8, 9) adapted to be lockingly interengaged, one such part (8) being connected to or forming part of the outlet valve and the other part (9) being connected to a delivery conduit (3), said pneumatic switch housing being mounted to or adjacent the part of the coupling means (7) connected to or forming part of the valve, and an operating member (18) for the plunger (15) being arranged to co-operate with the other said part in such a way that when the parts (8, 9) are interconnected the plunger is moved to its open condition, against the spring biasing.

6. A fluid transport container including one or more outlet valves as claimed in any preceding claim.

## Revendications

1. Soupape de sortie (1) destinée à un récipient de transport de fluide, la soupape (1) étant destinée à être connectée à un conduit (3) de distribution de fluide par l'intermédiaire d'un dispositif (7) d'accouplement temporaire et étant destinée à être ouverte afin qu'elle permette l'évacuation du fluide du récipient dans le conduit de distribution (3), et un dispositif (11) associé au dispositif d'accouplement (7) et destiné à empêcher l'ouverture de la soupape (1) lorsqu'elle n'est pas connectée à un conduit de distribution (3) par l'intermédiaire du dispositif d'accouplement (7), caractérisée en ce que la soupape peut être ouverte sélectivement à la suite d'un signal d'ouverture créé à distance de la soupape (1), et le dispositif (11) destiné à empêcher l'ouverture comporte un dispositif destiné à isoler la soupape (1) d'un signal d'ouverture, à moins que la soupape (1) ne soit raccordée à un conduit de distribution (3).

2. Soupape de sortie selon la revendication 1, comprenant un organe de fermeture (2) qui est mobile vers une position d'ouverture à la suite de l'application d'une pression pneumatique à la soupape (1) par l'intermédiaire d'une canalisation d'alimentation (12), le dispositif (11) destiné à empêcher l'ouverture de la soupape comportant un commutateur pneumatique (11) connecté à la canalisation d'alimentation (12) et destiné à isoler la soupape (1) de la source de pression pneumatique lorsque la soupape (1) n'est pas connectée à un conduit de distribution (3).

3. Soupape de sortie selon la revendication 2, dans laquelle le commutateur (11) comporte un boîtier délimitant un trou (13) ayant des conduits radiaux d'entrée et de sortie (14) destinés à être connectés à la canalisation pneumatique (12) d'alimentation, et un plongeur (15) destiné à se déplacer axialement dans le trou (13) entre une position d'ouverture dans laquelle les conduits d'entrée et de sortie (14) communiquent mutuellement et une position fermée dans laquelle l'écoulement du gaz entre les conduits est empêché, le boîtier étant monté sur le dispositif d'accouplement (7) ou près de celui-ci et coopérant avec celui-ci de manière que le plongeur (15) ne soit déplacé vers sa position d'ouverture que lorsque la soupape est connectée à un conduit (3).

4. Soupape de sortie selon la revendication 3, dans laquelle le plongeur (15) est rappelé par un ressort en position de fermeture.

5. Soupape de sortie selon les revendications 3 et 4, dans lequel le dispositif d'accouplement (7) comporte des parties mâle et femelle complémentaires (8, 9) destinées à coopérer en pouvant être verrouillées, l'une des parties (8) étant connectée à la soupape de sortie ou faisant partie de celle-ci et l'autre partie (9) étant connectée à un conduit de distribution (3), le boîtier du commutateur pneumatique étant monté sur la partie du dispositif (7) d'accouplement qui est connectée à la soupape ou qui en fait partie ou près de cette partie, et un organe de manoeuvre (18) du plongeur (15) étant destiné à coopérer avec l'autre partie de manière que, lorsque les parties (8, 9) sont interconnectées, le plongeur se déplace vers sa position d'ouverture, malgré la force de rappel du ressort.

6. Récipient de transport de fluide, comprenant une ou plusieurs soupapes de sortie selon l'une quelconque des revendications précédentes.

## Patentansprüche

1. Auslaßschieber (1) für einen Behälter zum Transport von Flüssigkeiten, der über eine lösbare Kupplungseinrichtung (7) mit einer Flüssigkeitsleitung (3) verbindbar ist und der geöffnet werden kann, um ein Ausbringen von Flüssigkeit aus dem Behälter in die Flüssigkeitsleitung (3) zu ermöglichen, mit einer der Kupplungseinrichtung (7) zugeordneten Einrichtung (11), welche ein öffnen des Schiebers (1) verhindert, wenn dieser über die Kupplungseinrichtung (7) nicht mit einem Flüssigkeitsschlauch (3) verbunden ist, dadurch gekennzeichnet, daß der Schieber (1) in Abhängigkeit von einem entfernt von ihm erzeugten Öffnungssignal selektiv geöffnet werden kann und daß die Einrichtung (11) zur Verhinderung der Schieberöffnung als Einrichtung ausgebildet ist, welche den Schieber (1) vom Öffnungssignal trennt, wenn er nicht mit einer Flüssigkeitsleitung (3) verbunden ist.

2. Auslaßschieber nach Anspruch 1 mit einem Verschlußelement (2), das in Abhängigkeit von einem dem Schieber (1) über eine Zufuhrleitung (12) zugeführten pneumatischen Druck in einen geöffneten Zustand bewegbar ist, wobei die Einrichtung (11) zur Verhinderung der Schieberöffnung als mit der Zufuhrleitung (12) verbundener pneumatischer Schalter (1) ausgebildet ist, der den Schieber (1) von einer pneumatischen Druckquelle trennt, wenn der Schieber (1) nicht mit einer Flüssigkeitsleitung (3) verbunden ist.

3. Auslaßschieber nach Anspruch 2, in dem der Schalter (11) ein eine Bohrung (13) mit einem radial gerichteten Einlaß- und einem Auslaßkanal (14) zur Einschaltung in die pneumatische Zufuhrleitung (12) definierendes Gehäuse und einen axial in der Bohrung (13) zwischen einem geöffneten Zustand, in dem der Einlaß- und Auslaßkanal (14) miteinander in Verbindung stehen, und einem geschlossenen Zustand in dem eine Gasströmung zwischen den Kanälen verhindert wird, bewegbaren Kolben (15) umfaßt, wobei das Gehäuse an der Kupplungseinrichtung (7) oder in deren Bereich montiert ist und so mit dieser zusammenwirkt, daß der Kolben (15) lediglich dann in seinen geöffneten Zustand bewegt wird, wenn der Schieber mit einer Leitung (3) verbunden ist.

4. Auslaßschieber nach Anspruch 3, in dem der Kolben (15) durch eine Feder in seinen geschlossenen Zustand vorgespannt ist.

5. Auslaßschieber nach den Ansprüchen 3 und 4, bei dem die Kupplungseinrichtung (7) ein Einsatz- und ein Aufnahmeteil (8, 9) umfaßt, die aneinander angepaßt sind und fest miteinander in Eingriff zu treten vermögen, bei dem eines der Teile (8) mit dem Auslaßschieber verbunden ist oder einen Teil von diesen bildet und das andere Teil (9) mit einer Flüssigkeitsleitung (3) verbunden ist, bei dem das Gehäuse des pneumatischen Schalters an dem Teil der Kupplungseinrichtung (7) oder in dessen Bereich montiert ist, das mit dem Schieber verbunden oder einen Teil von diesen bildet, und ein Betätigungselement (18) für den Kolben (15) so angeordnet ist, daß es mit dem anderen Teil derart zusammenwirkt, daß bei miteinander verbundenen Teilen (8, 9) der Kolben gegen die Vorbelastung durch die Feder in seinen geöffneten Zustand bewegt wird.

6. Behälter zum Transport von Flüssigkeiten mit einem oder mehreren Auslaßschiebern gemäß den vorhergehenden Ansprüchen.

FIG.1.

FIG.2